# EUROPEAN PATENT APPLICATION

(11) **EP 4 700 138 A1**
(43) Date of publication of application: **25.02.2026**
(21) Application number: 24791601.8
(22) Date of filing: 09.04.2024
(51) Int. Cl.: C22B 1/14, C22B 1/24, C10L 5/06

(54) **COLD-PRESSED SOLID AGGLOMERATE AND THE MANUFACTURING PROCESS THEREOF**

(30) Priority: 20.04.2023 BR 102023007547
(71) Applicant: Tecnored Desenvolvimento Tecnologico S.A., 12422-281, Pindamonhangaba, SP (BR)
(72) Inventor: POTTER, Stephen Michael, 22250-145 Rio de Janeiro, RJ (BR); DE OLIVEIRA, Ronald Lopes, 12405-278 Pindamonhangaba, SP (BR); GONÇALVES, Guilherme Francisco, 12412-520 Pindamonhangaba, SP (BR); AGRA, Anderson Azevedo, 90620-110 Porto Alegre, RS (BR); GONÇALVES, Manoel Vítor Borel, 31330-670 Belo Horizonte, MG (BR); CAMPOS, Alex Milton Albergaria, 12410-170 Pindamonhangaba, SP (BR)
(74) Representative: Clarke, Modet y Cía., S.L.
(86) International application number: PCT/BR2024/050145
(87) International publication number: WO 2024/216352

(57) **Abstract**

The present invention pertains to a cold-pressed solid agglomerate comprising DRI fines or pre-reduced briquette fines. In this context, the invention presents a versatile agglomerate that can be used in blast furnaces, basic oxygen furnaces (BOF), and electric arc furnaces (EAF). For this purpose, the agglomerate of the invention comprises (i) 80 to 90% by mass of DRI fines or pre-reduced briquette fines, (ii) 5 to 10% by mass of at least one binder, and (iii) 5 to 10% by mass of charcoal. According to the invention, the process of manufacturing the cold-pressed solid agglomerate comprises the steps of: (i) mixing 80 to 90% by mass of DRI fines or pre-reduced briquette fines, 5 to 10% by mass of at least one binder, and 5 to 10% by mass of charcoal; and (ii) cold-pressing the mixture of DRI fines or pre-reduced briquette fines, at least one binder and charcoal.

## Description

### FIELD OF THE INVENTION

The present invention relates to solid agglomerates. More specifically, the present invention relates to a cold-pressed solid agglomerate comprising DRI or pre-reduced briquette fines.

### BACKGROUND OF THE INVENTION

Steel and its alloys are of fundamental importance in modern society, making the steelmaking sector essential for economic and sustainable growth. However, the high volume of waste generated during the iron and steel production processes requires special attention from researchers, as there is an apparent need to treat and/or reuse this waste to reduce the environmental impacts and the consumption of natural resources. To achieve sustainability in the iron and steel industry, the circular economy (CE) is one of the important pillars. Theoretically, a circular economy is an economic system designed to maximize resource extraction and minimize waste disposal. In this sense, the CE enables the valorization of steelmaking waste by reusing it in the process itself.

The traditional steel production route uses a blast furnace (BF) as a reduction reactor to obtain iron. An alternative technology that reduces the energy use and the carbon emissions is based on iron production by direct reduction. The direct reduction product is called sponge iron or DRI (Direct Reduced Iron), which is intended to the steel plant for producing steel in basic oxygen furnaces (BOF) or electric arc furnaces (EAF).

The direct reduction product can be briquetted to obtain HBI (Hot Briquetted Iron), which consists of a resistant and low-porosity agglomerate capable of being transported over long distances for use in subsequent processes. During the production and handling of DRI, fines composed primarily of metallic iron, as well as iron oxides and gangue, are generated.

By using the AF-BOF route, an average of 500 kg of waste is generated for each ton of liquid steel produced. In addition, each ton of liquid steel obtained from electric arc furnaces generates approximately 185 kg of waste. If all of this steelmaking byproduct were disposed of solely in landfills and dams, the environmental impact would certainly be significant. In this way, to achieve sustainability in the steelmaking industry, it is extremely important to consider different technical solutions that aim to reuse this waste internally.

Currently, the DRI fines are agglomerated and "reused/recycled" in pig iron or steel production plants. These materials have a limited and exclusive destination. In some cases, the briquette is intended for use in the steel production in an electric or oxygen furnace, where the iron is melted and incorporated, with the components separated and removed in the slag. In other cases, the fines produced in direct reduction plants are briquetted on-site and used in the DRI production process itself, as if the material were recycled. Lime, molasses, and sodium silicate are commonly used as binders for agglomerate production, and the size and shape are similar to those of HBI. The agglomeration process as used is simple and focuses on reducing the surface area per volume of material, reducing reoxidative capacity, and recycling the material. However, certain parameters, such as fine granulometry, the use of alternative binders, and the agglomerate geometry, can limit the product's physical-chemical and mechanical properties. These limitations prevent the material from being used in a more versatile way, such as in iron-to-steel conversion processes, reduction and melting furnaces, induction furnaces, and others.

The invention proposed herein solves the problems of the state of the art described above in a simple and efficient manner.

### SUMMARY OF THE INVENTION

The present invention has as a first objective to provide a cold-pressed solid agglomerate and a manufacturing process for the same capable of reusing such waste generated in the steelmaking industry.

The present invention has as a second objective to provide a cold-pressed solid agglomerate that can be used in blast furnaces, oxygen converters (BOF), electric arc furnaces (EAF), and self-reducing shaft furnaces or melters (melters and smelters).

The present invention has as a third objective to provide a cold-pressed solid agglomerate and a production process for the same that mitigate the carbon emissions and increase the energy efficiency of the steel industry process.

In order to achieve the objectives described above, the present invention provides a cold-pressed solid agglomerate comprising (i) 80 to 90% by mass of DRI fines or pre-reduced briquette fines, (ii) 5 to 10% by mass of at least one binder, and (iii) 5 to 10% by mass of charcoal.

The present invention further provides a process for manufacturing a cold-pressed solid agglomerate comprising the steps of (i) mixing 80 to 90% by mass of DRI fines or pre-reduced briquette fines, 5 to 10% by mass of at least one binder, and 5 to 10% by mass of charcoal, and (ii) cold-pressing the mixture of DRI fines, at least one binder, and charcoal.

### DETAILED DESCRIPTION OF THE INVENTION

As a preliminary point, it should be emphasized that the following description will be based on a preferred embodiment of the invention. As will be evident to anyone skilled on the subject, however, the invention is not limited to this particular embodiment.

The present invention provides a cold-pressed solid agglomerate and a process for manufacturing the same. The cold-pressed solid agglomerate of the present invention comprises:
80 to 90% by mass of DRI fines or pre-reduced briquette fines;
5 to 10% by mass of at least one binder;
5 to 10% by mass of charcoal.

Preferably, the at least one binder may comprise at least one of: water, starch, phenolic resins, lime, molasses, sodium silicate, and sodium hydroxide.

Preferably, the at least one binder is obtained by combining water, starch, and sodium hydroxide in the following mass proportions:
Water: 83 to 87.5%;
Starch: 12 to 16%;
Sodium Hydroxide: 0.5 to 1%.

Preferably, the at least one binder may be organic, miscible in water, and fluid at room temperature.

Preferably, the agglomerate of the present invention comprises at least one liquid additive added to the mixture, which provides operational convenience. Optionally, a mold flux agent, such as calcium oxide, may be used to impart greater fluidity to the slag formed in the steel furnace where the agglomerate of the present invention will also be used.

The process for manufacturing the cold-pressed solid agglomerate according to the present invention comprises the steps of (i) mixing 80 to 90% by mass of DRI fines, 5 to 10% by mass of at least one binder, and 5 to 10% by mass of charcoal; (ii) cold-pressing the mixture of DRI fines, at least one binder, and charcoal.

Preferably, the process for manufacturing the cold-pressed solid agglomerate according to the present invention controls the granulometry of the DRI fines or pre-reduced briquette fines by comminuting the material in at least one crusher and/or mill and separating the same in at least one sieve, separating the DRI fines or pre-reduced briquette fines into particles within the optimal granulometry curve of the process.

Optionally, the use of magnetic separators may be included in the granulometry control process with the purpose of increasing the iron concentration of the agglomerate.

Preferably, the process for manufacturing the cold-pressed solid agglomerate according to the present invention comprises the step of adding an additive to the mixture prior to the step of cold-pressing the mixture. As mentioned previously, the additive may be, for example, a mold flux agent, such as calcium oxide, to improve the fluidity of the slag formed in the steelmaking furnace where the agglomerate of the present invention will also be used.

Preferably, the process for manufacturing the cold-pressed solid agglomerate comprises a step of drying the solid agglomerate after the step of cold-pressing the mixture.

In this way, it is observed that the present invention provides a cold-pressed solid agglomerate comprising DRI fines and a manufacturing process of the same capable of reusing such waste generated in the steel industry. The DRI fines are then reused so that iron and steel productions can be carried out in a wider range of reactors, such as blast furnaces, oxygen converters (BOF), electric arc furnaces (EAF), and self-reducing shaft furnaces or melters (melters and smelters).

In this way, waste from the steel industry is reused to increase the energy efficiency of the process, reducing the production costs and the impacts generated by the carbon emissions, especially due to the presence of charcoal (biocarbon) in the composition of the agglomerate of the present invention.

Numerous variations affecting the scope of protection of the present application are permitted. In this way, it is emphasized that the present invention is not limited to the particular configurations/embodiments described above.

## Claims

1. A cold-pressed solid agglomerate, **characterized in that** it comprises:
80 to 90% by mass of DRI fines or pre-reduced briquette fines;
5 to 10% by mass of at least one binder;
5 to 10% by mass of charcoal.

2. The agglomerate according to claim 1, **characterized in that** the at least one binder comprises at least one of:
water;
starch;
phenolic resins;
lime;
molasses;
sodium silicate;
calcium oxide;
sodium hydroxide.

3. The agglomerate according to claim 1 or 2, **characterized in that** the at least one binder is obtained by combining water, starch, and sodium hydroxide in the following mass proportions:
Water: 83 to 87.5%;
Starch: 12 to 16%;
Sodium Hydroxide: 0.5 to 1%.

4. The agglomerate according to any one of claims 1 to 3, **characterized in that** the at least one binder is miscible in water and fluid at room temperature.

5. The agglomerate according to any one of claims 1 to 4, **characterized in that** it further comprises at least one additive.

6. The agglomerate according to any one of claims 1 to 5, **characterized in that** the granulometry of the used compounds follows an optimal distribution curve according to the Alfred model.

7. A process for manufacturing a cold-pressed solid agglomerate, **characterized in that** it comprises:
mixing 80 to 90% by mass of DRI fines or pre-reduced briquette fines, 5 to 10% by mass of at least one binder, and 5 to 10% by mass of charcoal; and
cold-pressing the mixture of DRI fines or pre-reduced briquette fines, at least one binder, and charcoal.

8. The process according to claim 7, **characterized in that** the step of controlling the granulometry of the DRI fines comprises:
comminuting the material in at least one crusher and/or mill; and
separating the comminuted material in at least one sieve.

9. The process according to claim 7 or 8, **characterized in that** it comprises the step of adding an additive to the mixture prior to the step of cold-pressing the mixture.

10. The process according to any one of claims 7 to 9, **characterized in that** it further comprises a step of drying or curing the solid agglomerate after the step of cold-pressing the mixture.
